# EUROPEAN PATENT SPECIFICATION

(11) **EP 2 625 090 B1**
(45) Date of publication and mention of the grant of the patent: **06.12.2017**
(21) Application number: 10858206.5
(22) Date of filing: 04.10.2010
(51) Int. Cl.: B62D 33/06

(54) **VEHICLE COMPRISING A DEFORMATION STRUCTURE**
FAHRZEUG MIT EINER VERFORMBAREN STRUKTUR
VÉHICULE COMPRENANT UNE STRUCTURE DE DÉFORMATION

(43) Date of publication of application: 14.08.2013
(73) Proprietor: Volvo Lastvagnar AB, 405 08 Göteborg (SE)
(72) Inventor: ALVARSSON, Billy, S-517 71 Olsfors (SE); KLASSON, Henrik, S-417 26 Göteborg (SE); COGNELL, Björn, S-414 72 Göteborg (SE)
(74) Representative: Volvo Technology Corporation
(86) International application number: PCT/SE2010/000237
(87) International publication number: WO 2012/047137

(56) References cited:
- EP-A1- 0 621 170
- EP-A2- 0 972 700
- WO-A1-02/47960
- WO-A1-03/101809
- WO-A1-03/101809
- WO-A1-2006/049536
- WO-A1-2006/100007
- WO-A1-2006/100007
- JP-A- H08 230 724
- JP-A- H10 316 013
- US-A1- 2005 225 119

## Description

### TECHNICAL FIELD

The invention relates to a vehicle according to the preamble of claim 1. In particular, the invention relates to a vehicle comprising a chassis which supports a cab via a cab bracket, where the cab is intended to be displaced backwards when the cab bracket is subjected to collision forces causing a controlled rupture of the bracket. In particular, the invention relates to a deformation structure comprising a rigid bracket provided with weakening means for achieving a controlled rupture of the bracket when subjected to collision forces exceeding a predetermined level.

### BACKGROUND ART

In a frontal collision between a truck or bus and another truck, for example, the front portion of the cab, together with the instrument panel, may be pushed in towards the driver seat due to the enormous forces arising in a collision.

Trucks of the cab-over type have a cab arranged on a vehicle chassis or a chassis. The anchoring of the cab to the vehicle chassis is, in certain truck designs, designed so that the cab will be at least partially separated from the vehicle frame in a head-on collision, so that the cab is pushed backwards. In this way, the cab front portion and the instrument panel are prevented from being pushed in and injuring the driver in the cab. Since the cab space will be essentially intact after the collision, the cab doors can still be opened, allowing the driver to get out of the cab.

It is previously known to let the cab separate from the vehicle frame by having one or more beams joining the cab to the vehicle frame be broken off during collision. To achieve this, each beam has a fracture indication dimensioned so that the beam is broken off when a certain force is applied to the beam. The beam must, however, also be dimensioned to withstand those stresses acting on the beam during the life of the truck, e.g. fatigue stresses. It is, however, difficult to dimension a beam so that it breaks off when subjected to a certain force in a collision, at the same time as it withstands fatigue stresses and forces arising during the everyday use of the truck.

From WO02147960 it is previously known to provide a truck with structures comprising beams held together by a plurality of screws or rivets. In a collision, the screws or rivets are broken off by the collision force, and the truck cab is then displaced in the direction of the force. Thus, the truck cab is maintained essentially intact after the collision. It is, however, difficult to dimension the structure so that the screws or rivets are broken off when subjected to a certain force arising in a collision at the same time as the structure must be dimensioned so that it can resist fatigue stresses and forces arising during the everyday use of the truck.

JP10250637 discloses an alternative chassis mount bracket, which is secured to the front of the chassis frame of a vehicle. A cab underframe is formed in a single piece with a cab front mount bracket and is supported rotatably with the aid of a pin. During a collision a torsional force acts on the chassis frame mount bracket uniform loads are applied to a number of securing bolts to prevent them from shearing rupture as much as practicable. Even if the load is sufficiently large to cause shearing rupture of all bolts, the chassis mount bracket 1 rotates to allow rearward movement of the cab- This solution suffers from similar problems, relating to difficulties in dimensioning a bracket and the securing bolts so that the bolts will only break off when subjected to a certain force in a collision.

JP H10 316013 A discloses a vehicle according the preamble of claim 1, thus a truck including a cab bracket arranged between the cab and the chassis.

The cab brackets comprises a pair of upper brackets and a pair of lower bracket, which are arranged on a sub-frame in the form of a beam. The sub-frame is further provided with a fraction indication allowing the sub-frame to bend about the fraction indication when subjected to longitudinal collision forces.

The invention aims to solve the above problems relating to dimensioning of an impact absorbing structure, which structure must also withstand fatigue stresses and forces arising during the everyday use of the truck.

### SUMMARY OF THE INVENTION

One object of the invention is to provide a vehicle comprising a deformation structure by means of which the abovementioned problems are solved. A particular object of the invention is to provide a vehicle comprising a cab bracket having a deformable section which can rupture in a controlled manner when subjected to a predetermined deformation force. Deformation force means the force at which the deformation structure gives way.

In the subsequent text, term such as longitudinal, transverse, front and rear are to be interpreted in relation to the main direction of travel of the vehicle. The invention is mainly related to load carrying vehicle, such as trucks, provided with a driver's compartment of the cab-over type, where the cab may or may not be tilted relative to the chassis. A cab according to the invention will be provided with transversely spaced cab bracket on either side of the underside of the cab, which cab brackets are located above each longitudinal beam making up the chassis.

The invention relates to a vehicle comprising a chassis and, supported on said chassis, a cab with an integrated cab bracket. In the event of collision in the direction from the front, said cab is arranged to be displaced backwards relative to the chassis. The cab bracket comprises a front portion and a rear portion and is arranged to connect the cab to the chassis at a lower portion of the cab bracket. The front portion comprises a load carrying primary leg, arranged to transmit longitudinal, vertical and transverse forces between the cab and the chassis during normal use of the vehicle. The rear portion comprises an auxiliary leg, arranged to break and permit longitudinal displacement only during a collision event. During normal use of the vehicle, any forces transmitted between the cab and the frame through the rear portion will be below the fatigue limit for this component and will have no effect on the fatigue strength of the said rear portion.

At least the rear portion of the cab bracket is provided with at least one notch providing an indication of fracture, wherein the auxiliary leg is arranged to rupture at the location of said at least one notch when subjected to longitudinal collision forces over a predetermined magnitude.

The lower ends of the primary leg and the auxiliary leg are joined at the lower portion of the cab bracket adjacent an attachment point joining the cab bracket to the chassis. In the case of a cab that can be tilted relative to the chassis, the attachment point can be a pivot joint.

The primary leg extends in a substantially vertical direction and the auxiliary leg extends at an angle upwards and rearwards relative to the primary leg. The front portion comprising the primary leg can extend in both the vertical direction, towards the chassis, and rearwards in the longitudinal direction, along a lower portion of the cab to which it is attached. The front portion of the cab bracket can comprise a reinforced attachment between the cab bracket and a longitudinal beam in the lower portion of the cab, and/or be provided with an optional secondary leg extending in a vertical and transverse direction between a lower portion of the cab bracket and the lower portion of the cab, in order to enhance the ability to transmit transverse forces during normal use of the vehicle. The rear portion comprising the auxiliary leg can extend at an angle upwards and rearwards in the vertical direction, from the chassis towards the cab, and forwards in the longitudinal direction, along a lower portion of the cab to which it is attached. The auxiliary leg is preferably arranged so that a line through the main extension of the auxiliary leg passes through or adjacent the attachment point joining the cab to the chassis.

The longitudinal portions of the front and rear portions of the cab bracket are preferably, but not necessarily, joined into a single bracket component fixedly attached to the lower surface of the cab. The said component can comprise at least two shaped and/or pressed sheet metal sections joined together to form the cab bracket. In its simplest form, the component comprises two longitudinal halves with similar general shapes which are joined together along at least part of their peripheral edges.

The primary leg and the auxiliary leg can enclose a cut-out portion through the cab bracket. The cut-out portion may comprise a slot or a shaped opening through the cab bracket, which cut-out portion has a main extension along a line between said at least one notch and the upper portion of the primary leg. The at least one notch is arranged in a front section of the auxiliary leg and/or in a rear section of the auxiliary leg. According to one example, a first notch is arranged in a front section of the auxiliary leg and a second notch in a rear section of the auxiliary leg is arranged along a line at right angles to the main extension of the auxiliary leg. The at least one notch is preferably arranged at a location where the auxiliary leg has its smallest cross-sectional area. Such a notch can comprise a cut-out located at or inside an outer edge of the auxiliary leg. A cut-out located at an outer edge can, for instance, have a semi-circular, half-oval or V-shape. A cut-out located inside an outer edge can, for instance, have a circular, oval or oblong shape. Notches with a shape having a main extension are preferably arranged with their main extension at right angles to the main extension of the auxiliary leg.

An additional notch can be arranged in a rear section of the primary leg, which additional notch is arranged to cause a subsequent rupture of the primary leg. Hence, once the auxiliary leg has ruptured during a collision event, the additional notch causes a rupture of the primary leg, in order to transmit additional collision forces and to allow the cab to move further backwards. The additional notch is preferably, but not necessarily, located in the direction of a line through a first and a second notch in the auxiliary leg. This arrangement would place the additional notch at the upper rear section of the primary leg, at the opposite side of the cut-out between the primary leg and the auxiliary leg. The additional notch can have the same shape and location as the notches described above.

As described above, a cab bracket can comprise at least two shaped and/or pressed sheet metal components joined together. In such a cab bracket, at least the auxiliary leg making up the rear portion can comprise a closed cross section. The closed cross-section can have a waist with a minimum cross-sectional area, which waist is located at or near the at least one notch. The primary leg can comprise an at least partially closed cross section. A component comprising two sheet metal sections can have a primary leg that is open towards its front and closed at its rear section. In this way it is possible to provide secure attachment points for component parts such as a pivot joint, a torsion bar, etc. between substantially parallel sides of the sheet metal sections. At the same time, sheet metal sections can be joined at the rear portion of the primary leg, to form a partially closed section. The latter arrangement allows all areas of the cab bracket surrounding the said cut-out portion between the primary and the auxiliary legs to be joined.

The cab bracket is an integral part of the cab fixedly joined to the lower portion thereof, for instance, by welding. The cab bracket can be welded to side portions or to a lower portion of a longitudinal beam extending along a lower portion of the cab. Any suitable welding method, such as spot welding or TIG welding, may be used for this purpose.

### BRIEF DESCRIPTION OF THE DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Figure 1: shows a schematic illustration of a cab provided with a bracket according to the invention;
- Figure 2: shows a lower, front perspective view of an outer portion of a cab floor;
- Figure 3: shows a side view of a cab bracket according to the invention;
- Figure 4: shows a front view of a cab bracket according to the invention; and
- Figure 5: shows an upper perspective view of a cab bracket according to the invention.

### DETAILED DESCRIPTION

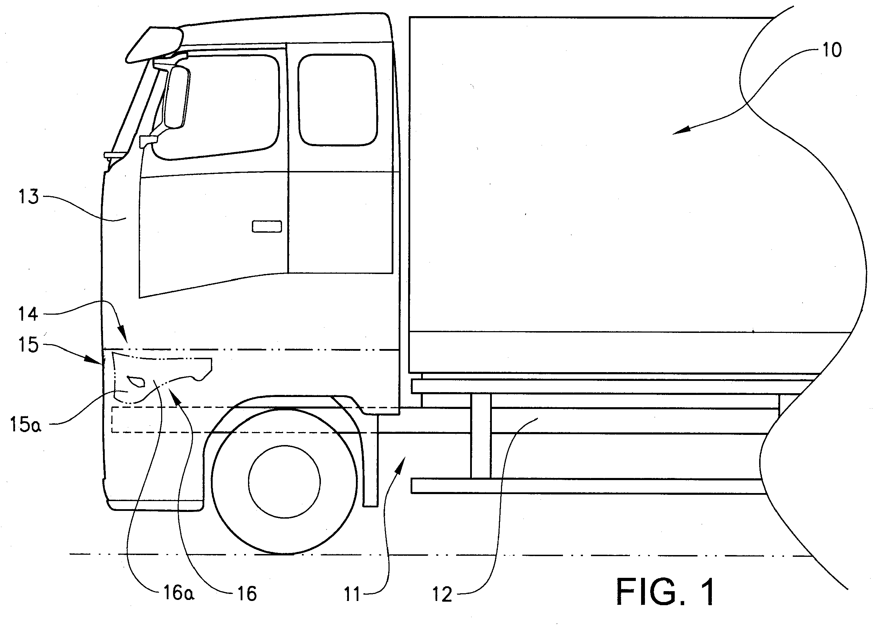

Figure 1 shows a schematic illustration of a cab provided with a bracket according to the invention. The figure shows a front portion of a vehicle 10 comprising a chassis 11 formed by a pair of longitudinal beams 12 (one shown). A cab 13 with an integral cab bracket 14 is supported on said chassis 11. In the event of collision in the direction from the front, said cab 13 is arranged to be displaced backwards relative to the chassis 11 and the longitudinal beams 12. The cab bracket 14 comprises a front portion 15 and a rear portion 16 and is arranged to connect the cab 13 to the chassis 11 at a lower portion 19 of the cab bracket 14. The front portion 15 comprises a load carrying primary leg 15a, arranged to transmit longitudinal, vertical and transverse forces between the cab 13 and the chassis 11 during normal use of the vehicle. The rear portion 16 comprises an auxiliary leg 16a, arranged to break and permit longitudinal displacement during a collision event. Such a longitudinal displacement will only take place during a collision. During normal use of the vehicle, any forces transmitted between the cab and the chassis 11 through the rear portion 16 will be negligible and will have no effect on the fatigue strength of the said rear portion.

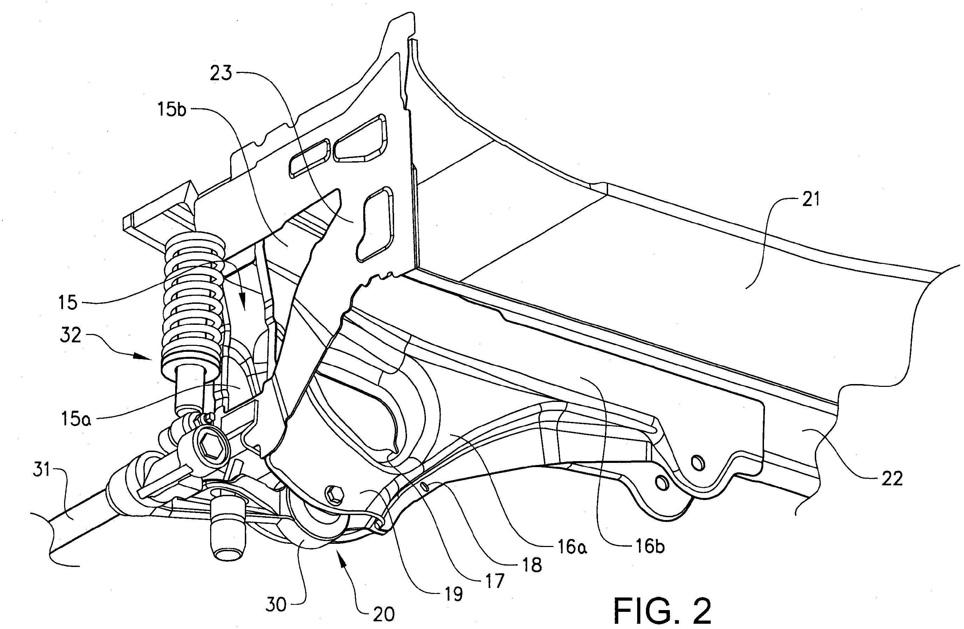

Figure 2 shows a lower, front perspective view of an outer portion of a cab floor 21. This portion of the cab floor 21 is arranged to be joined with a side wall of the cab (not shown). The cab bracket 14 is fixedly joined to a reinforcing, longitudinal beam 22 integral with the cab floor, e.g. by welding or another suitable method. According to the invention, at least the rear portion 16 of the cab bracket 14 is provided with at least one notch providing an indication of fracture. The rear portion 16 of the embodiment shown in Figure 2 is provided with two notches 17, 18 wherein the auxiliary leg 16a is arranged to rupture at the location of said notches 17, 18 when subjected to longitudinal collision forces over a predetermined magnitude.

Figure 2 further shows how the lower ends of the primary leg 15a and the auxiliary leg 16a are joined at the lower portion 19 of the cab bracket 14 adjacent an attachment point 20 joining the cab bracket to the chassis. In the case of a cab that can be tilted relative to the chassis, the attachment point 20 can be a pivot joint.

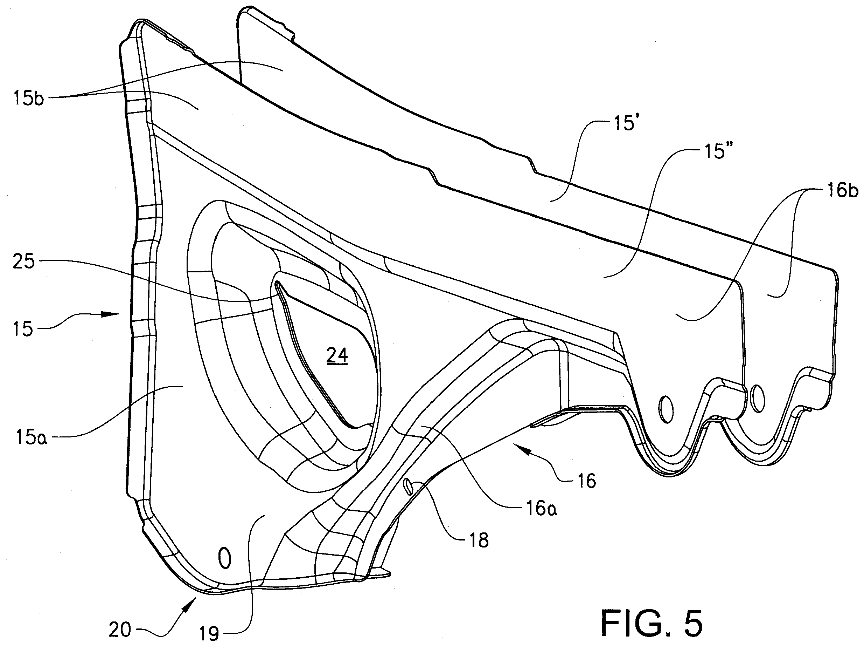

The primary leg 15a extends in a substantially vertical direction and the auxiliary leg 16a extends at an angle upwards and rearwards relative to the primary leg 15a. The front portion 15 comprising the primary leg 15a extends in the vertical direction, between the cab floor 21 and the chassis 11. An upper portion 15b of the primary leg 15a comprises two sections extending rearwards in the longitudinal direction, along both sides of the beam 22 at the lower portion of the cab 14 to which it is attached, until it joins an upper portion 16b of the auxiliary leg 16a. The upper portion 16b of the auxiliary leg 16a also comprises two sections extending along both sides of the beam 22, as schematically indicated in Figure 5. The front, upper portion 15b of the primary leg 15a of the cab bracket 14 comprises a reinforced attachment between the cab bracket 14 and the longitudinal beam 22 in the lower portion of the cab 14. The embodiment of Figure 2 is also provided with an optional secondary leg 23 extending in a vertical and transverse direction between the lower portion 19 of the cab bracket 14 and the lower portion of the cab floor 21, in order to enhance the ability to transmit transverse forces during normal use of the vehicle. The rear portion 16 comprising the auxiliary leg 16a extends at an angle upwards and rearwards in the vertical direction, from the chassis 11 towards the cab 14, and the upper portion 16b thereof extends forwards in the longitudinal direction, along the lower portion of the cab to which it is attached. The auxiliary leg 16a is preferably arranged so that a line through the main extension of the auxiliary leg passes through or adjacent the attachment point 20 joining the cab 14 to the chassis 11.

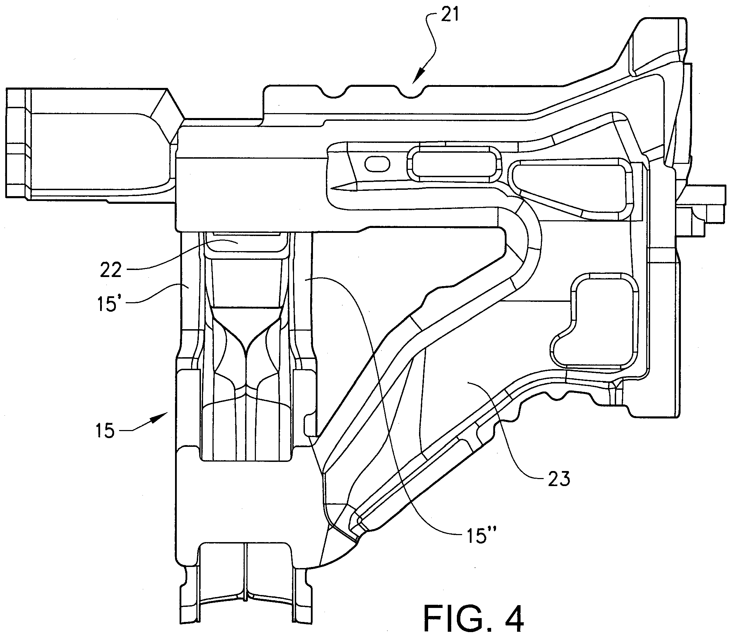

The longitudinal upper portions 15a, 16b of the front and rear portions 15, 16 of the cab bracket 14 are joined into a single bracket component fixedly attached to the longitudinal beam 22 along the lower surface of the cab 14. The said bracket component comprises a single bent section or at least two shaped and/or pressed sheet metal sections joined together to form the cab bracket 14. In its simplest form, the component comprises two longitudinal, substantially mirrored halves 14a, 14b with similar general shapes which are joined together along at least part of their peripheral edges. Figures 4 and 5 show a front view and an upper perspective view, respectively, of the cab bracket 14 to illustrate this arrangement.

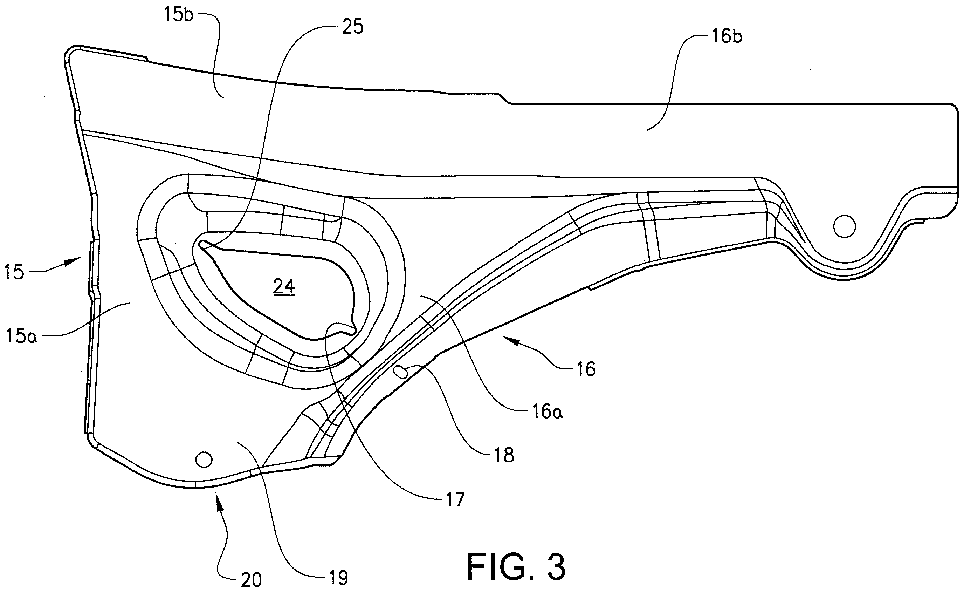

The primary leg 15a and the auxiliary leg 16a encloses a cut-out portion 24 through the cab bracket 14. Figure 3 shows a side view of the cab bracket. The cut-out portion 24 comprises a slot or a shaped opening through the cab bracket 14, which cut-out portion 24 has a main extension along a line between the notches 17, 18 in the auxiliary leg 16a and the upper portion 15b of the primary leg 15a. According to this example, a first notch 17 is arranged in a front section of the auxiliary leg 16a and a second notch 18 in a rear section of the auxiliary leg 16a is arranged along a line substantially at right angles to the main extension of the auxiliary leg 16a. The notches 17, 18 are preferably arranged at a location where the auxiliary leg has its smallest cross-sectional area, as indicated in Figure 3. Such notches can comprise a cut-out located at an outer edge of the auxiliary leg 16, as the first notch 17, or inside an outer edge of the auxiliary leg 16a, as the second notch 18. A cut-out located at an outer edge can, for instance, have a semi-circular, half-oval or V-shape. A cut-out located inside an outer edge can, for instance, have a circular, oval or oblong shape. Notches with a shape having a main extension are preferably arranged with their main extension at right angles to the main extension of the auxiliary leg.

As indicated in Figure 3, an additional notch 25 can be arranged in a rear section of the primary leg 15a, which additional notch 25 is arranged to cause a subsequent rupture of the primary leg 15a. Hence, once the auxiliary leg 16a has ruptured during a collision event, the additional notch 25 causes a rupture of the primary leg 15a, in order to allow the cab 13 to move further backwards. The additional notch 25 is preferably located substantially in the direction of a line through the first and second notches 17, 18 in the auxiliary leg 16a. This arrangement would place the additional notch at the upper rear section of the primary leg 15a, at the opposite side from the first notch 17 in the cut-out portion 24 between the primary leg 15a and the auxiliary leg 16a. The additional notch 25 shown is of the same type as the first notch 17, but can have the same shape and location as any of the notches described above.

As described above, a cab bracket 14 can comprise at least two shaped and/or pressed sheet metal components joined together. In such a cab bracket the auxiliary leg 16a making up the rear portion 16 comprises a closed cross section, as indicated in Figures 2 and 5. In these figures it can be seen that the edge surrounding the cut-out portion 24 and the rear edge of the auxiliary leg 16a are joined together. The closed cross-section of the auxiliary leg 16a has a waist with a minimum cross-sectional area, which waist is located at or near the first and second notches 17, 18.

The primary leg 15a shown in Figure 4 comprises an at least partially closed cross section. The component comprises two sheet metal sections 15', 15" wherein the primary leg 15a that is open towards its front and closed at its rear section adjacent the cut-out portion 24. In this way it is possible to provide secure attachment points for component parts such as a pivot joint 30, a torsion bar 31 and a spring means 32 (see Figure 2) between substantially parallel sides of the sheet metal sections 15', 15". At the same time, the sheet metal sections 15', 15" are joined at the rear portion of the primary leg 15a, to form a partially closed section. The latter arrangement allows all areas of the cab bracket surrounding the said cut-out portion 24 between the primary and the auxiliary legs 15a, 16a to be joined, as described above. The sheet metal sections 15', 15" are joined to the reinforcing beam 22 (shown in Figure 2) along their upper portions indicated in Figure 5. In the figures, the reference numerals 15' and 15" are used to indicate the two halves of the cab bracket and not a particular portion thereof.

The cab bracket 14 is an integral part of the cab 13 fixedly joined to the lower portion of said cab, for instance, by welding. The cab bracket 14 can be welded to substantially vertical side portions of the longitudinal beam 22, or to a lower portion thereof. Any suitable welding method, such as spot welding or TIG welding, may be used for this purpose.

## Claims

1. A vehicle (10) comprising a chassis (11) and, supported on said chassis (11), a cab (13) with an integrated cab bracket (14), said cab (13) being arranged, in the event of collision in the direction from the front, to be displaced backwards relative to the chassis (11), wherein the cab bracket (14) comprises a front portion (15) and a rear portion (16) and is arranged to connect the cab (13) to the chassis (11) at a lower portion of the cab bracket (14), the front portion (15) comprises a load carrying primary leg (15a), for transmitting longitudinal, vertical and transverse forces between the cab and the chassis during normal use of the vehicle, and the rear portion (16) comprises an auxiliary leg (16a), **characterized in that** the primary leg (15a) and the auxiliary leg (16a) enclose a cut-out portion (24) through the cab bracket (14), and that at least the rear portion (16) is provided with at least one notch (17, 18) providing an indication of fracture, wherein the auxiliary leg is arranged to rupture at the location of said at least one notch (17, 18) when subjected to longitudinal collision forces over a predetermined magnitude, allowing longitudinal displacement during a collision event.

2. Vehicle according to claim 1, **characterized in that** the lower ends of the primary leg (15a) and the auxiliary leg (16a) are joined at the lower portion of the cab bracket adjacent an attachment point (20) joining the cab bracket (14) to the chassis (11).

3. Vehicle according to claim 2, **characterized in that** the primary leg (15a) extends in a vertical direction and the auxiliary leg (16a) extends at an angle upwards and rearwards relative to the primary leg.

4. Vehicle according to claim 3, **characterized in that** the auxiliary leg (16a) is arranged so that a line through the main extension of the auxiliary leg (16a) passes through or adjacent the attachment point (20) joining the cab to the chassis.

5. Vehicle according to any one of claims 1-4, **characterized in that** the at least one notch (17, 18) is arranged in a front section of the auxiliary leg (16a) and/or in a rear section of the auxiliary leg (16a).

6. Vehicle according to claim 5, **characterized in that** a first notch (17) is arranged in a front section of the auxiliary leg (16a) and a second notch (18) in a rear section of the auxiliary leg (16a) is arranged along a line at right angles to the main extension of the auxiliary leg.

7. Vehicle according to claim 5 or 6, **characterized in that** an additional notch is arranged in a rear section of the primary leg (15a), which additional notch (25) is arranged to cause a subsequent rupture of the primary leg (15a).

8. Vehicle according to claim 7, **characterized in that** the additional notch (25) located in the direction of a line through a first and a second notch (17, 18) in the auxiliary leg (16a).

9. Vehicle according to any one of the above claims, **characterized in that** at least the auxiliary leg (16a) making up the rear portion comprises a closed cross section.

10. Vehicle according to any one of the above claims, **characterized in that** the primary leg (15a) comprises an at least partially closed cross section.

11. Vehicle according to any one of the above claims, **characterized in that** the cab bracket (14) is an integral part of the lower portion of the cab.

12. Vehicle according to claim 11, **characterized in that** the cab bracket (14) is joined to side or lower portion of a longitudinal beam (22) extending along a lower portion of the cab.

## Patentansprüche

1. Fahrzeug (10) umfassend ein Chassis (11) und, abgestützt an dem Chassis (11), eine Kabine (13) mit einer integrierten Kabinenhalterung (14), wobei die Kabine (13) dazu angeordnet ist, im Falle einer Kollision in der Richtung von vorne, relativ zu dem Chassis (11) nach hinten verschoben zu werden, wobei die Kabinenhalterung (14) einen vorderen Abschnitt (15) und einen hinteren Abschnitt (16) umfasst und dazu angeordnet ist, die Kabine (13) mit dem Chassis (11) an einem unteren Abschnitt der Kabinenhalterung (14) zu verbinden, der vordere Abschnitt (15) einen lasttragenden primären Schenkel (15a), zum Übertragen von Längs-, Vertikal- und Querkräften zwischen der Kabine und dem Chassis während einer normalen Benutzung des Fahrzeugs, umfasst, und der hintere Abschnitt (16) einen Hilfsschenkel (16a) umfasst, **dadurch gekennzeichnet, dass** der primäre Schenkel (15a) und der Hilfsschenkel (16a) einen ausgeschnittenen Abschnitt (24) durch die Kabinenhalterung (14) hindurch umschließen, und dass wenigstens der hintere Abschnitt (16) mit wenigstens einer Kerbe (17, 18) versehen ist, die eine Bruchindikation bereitstellt, wobei der Hilfsschenkel dazu angeordnet ist, an der Stelle der wenigstens einen Kerbe (17, 18) zu brechen, wenn er Längskollisionskräften über einer vorgegebenen Größe ausgesetzt wird, was während eines Kollisionsereignisses eine Längsverschiebung erlaubt.

2. Fahrzeug nach Anspruch 1, **dadurch gekennzeichnet, dass** die unteren Enden des primären Schenkels (15a) und des Hilfsschenkels (16a) an dem unteren Abschnitt der Kabinenhalterung angrenzend an einen Anbringungspunkt (20) verbunden sind, der die Kabinenhalterung (14) mit dem Chassis (11) verbindet.

3. Fahrzeug nach Anspruch 2, **dadurch gekennzeichnet, dass** sich der primäre Schenkel (15a) in einer vertikalen Richtung erstreckt und sich der Hilfsschenkel (16a) in einem Winkel nach oben und nach hinten relativ zu dem primären Schenkel erstreckt.

4. Fahrzeug nach Anspruch 3, **dadurch gekennzeichnet, dass** der Hilfsschenkel (16a) so angeordnet ist, dass eine Linie durch die Haupterstreckung des Hilfsschenkels (16a) durch den oder angrenzend an den die Kabine mit dem Chassis verbindenden Anbringungspunkt (20) hindurchgeht.

5. Fahrzeug nach einem der Ansprüche 1-4, **dadurch gekennzeichnet, dass** die wenigstens eine Kerbe (17, 18) in einem vorderen Abschnitt des Hilfsschenkels (16a) und/oder in einem hinteren Abschnitt des Hilfsschenkels (16a) angeordnet ist.

6. Fahrzeug nach Anspruch 5 , **dadurch gekennzeichnet, dass** eine erste Kerbe (17) in einem vorderen Abschnitt des Hilfsschenkels (16a) angeordnet ist und eine zweite Kerbe (18) in einem hinteren Abschnitt des Hilfsschenkels (16a) entlang einer Linie im rechten Winkel zu der Haupterstreckung des Hilfsschenkels angeordnet ist.

7. Fahrzeug nach Anspruch 5 oder 6, **dadurch gekennzeichnet, dass** eine zusätzliche Kerbe in einem hinteren Abschnitt des primären Schenkels (15a) angeordnet ist, wobei die zusätzliche Kerbe (25) dazu angeordnet ist, einen nachfolgenden Bruch des primären Schenkels (15a) zu bewirken.

8. Fahrzeug nach Anspruch 7, **dadurch gekennzeichnet, dass** die zusätzliche Kerbe (25) sich in der Richtung einer Linie durch eine erste und eine zweite Kerbe (17, 18) in dem Hilfsschenkel (16a) befindet.

9. Fahrzeug nach einem derobigenAnsprüche, **dadurch gekennzeichnet, dass** wenigstens der Hilfsschenkel (16a), der den hinteren Abschnitt ausmacht, einen geschlossen Querschnitt umfasst.

10. Fahrzeug nach einem derobigenAnsprüche, **dadurch gekennzeichnet, dass** der primäre Schenkel (15a) einen wenigstens teilweise geschlossenen Querschnitt umfasst.

11. Fahrzeug nach einem derobigenAnsprüche, **dadurch gekennzeichnet, dass** die Kabinenhalterung (14) ein integraler Bestandteil des unteren Abschnitts der Kabine ist.

12. Fahrzeug nach Anspruch 11, **dadurch gekennzeichnet, dass** die Kabinenhalterung (14) mit einem seitlichen oder unteren Abschnitt eines Längsträgers (22) verbunden ist, der sich entlang eines unteren Abschnitts der Kabine erstreckt.

## Revendications

1. Véhicule (10) comprenant un châssis (11) et, une cabine (13) ayant un support de cabine intégré (14), supportée sur ledit châssis (11), ladite cabine (13) étant agencée, en cas de collision dans le sens de l'avant, de manière à être déplacée vers l'arrière par rapport au châssis (11), dans lequel le support de cabine (14) comprend une partie avant (15) et une partie arrière (16) et est agencé pour relier la cabine (13) au châssis (11) au niveau d'une partie inférieure du support de cabine (14), la partie avant (15) comprend une jambe primaire porteuse de charge (15a), pour transmettre des forces longitudinales, verticales et transversales entre la cabine et le châssis pendant l'utilisation normale du véhicule, et la partie arrière (16) comprend une jambe auxiliaire (16a), **caractérisé en ce que** la jambe primaire (15a) et la jambe auxiliaire (16a) enferment une partie découpée (24) à travers le support de cabine (14), et **en ce qu'**au moins la partie arrière (16) est munie d'au moins une encoche (17, 18) fournissant une indication de cassure, dans lequel la jambe auxiliaire est agencée pour se rompre à l'emplacement de ladite au moins une encoche (17, 18) lorsqu'elle est soumise à des forces de collision longitudinales supérieures à une amplitude prédéterminée, permettant un déplacement longitudinal pendant un événement de collision.

2. Véhicule selon la revendication 1, **caractérisé en ce que** les extrémités inférieures de la jambe primaire (15a) et de la jambe auxiliaire (16a) sont reliées au niveau de la partie inférieure du support de cabine adjacente à un point de fixation (20) reliant le support de cabine (14) au châssis (11).

3. Véhicule selon la revendication 2, **caractérisé en ce que** la jambe primaire (15a) s'étend dans une direction verticale et la jambe auxiliaire (16a) s'étend selon un angle vers le haut et vers l'arrière par rapport à la jambe primaire.

4. Véhicule selon la revendication 3, **caractérisé en ce que** la jambe auxiliaire (16a) est agencée de sorte qu'une ligne traversant l'extension principale de la jambe auxiliaire (16a) passe à travers le point de fixation (20) reliant la cabine au châssis ou de manière adjacente à celui-ci.

5. Véhicule selon l'une quelconque des revendications 1 à 4, **caractérisé en ce que** l'au moins une encoche (17, 18) est agencée dans une section avant de la jambe auxiliaire (16a) et/ou dans une section arrière de la jambe auxiliaire (16a).

6. Véhicule selon la revendication 5, **caractérisé en ce qu'**une première encoche (17) est agencée dans une section avant de la jambe auxiliaire (16a) et une deuxième encoche (18) dans une section arrière de la jambe auxiliaire (16a) est agencée le long d'une ligne perpendiculaire à l'extension principale de la jambe auxiliaire.

7. Véhicule selon la revendication 5 ou 6, **caractérisé en ce qu'**une encoche supplémentaire est agencée dans une section arrière de la jambe primaire (15a), laquelle encoche supplémentaire (25) est agencée pour provoquer une rupture ultérieure de la jambe primaire (15a).

8. Véhicule selon la revendication 7, **caractérisé en ce que** l'encoche supplémentaire (25) située dans la direction d'une ligne à travers une première et une deuxième encoche (17, 18) dans la jambe auxiliaire (16a).

9. Véhicule selon l'une quelconque des revendications précédentes, **caractérisé en ce qu'**au moins la jambe auxiliaire (16a) constituant la partie arrière comprend une section transversale fermée.

10. Véhicule selon l'une quelconque des revendications précédentes, **caractérisé en ce que** la jambe primaire (15a) comprend une section transversale au moins partiellement fermée.

11. Véhicule selon l'une quelconque des revendications précédentes, **caractérisé en ce que** le support de cabine (14) fait partie intégrante de la partie inférieure de la cabine.

12. Véhicule selon la revendication 1, **caractérisé en ce que** le support de cabine (14) est relié à une partie latérale ou inférieure d'une poutre longitudinale (22) s'étendant le long d'une partie inférieure de la cabine.
